# EUROPEAN PATENT APPLICATION

(11) **EP 4 696 649 A1**
(43) Date of publication of application: **18.02.2026**
(21) Application number: 24767980.6
(22) Date of filing: 30.07.2024
(51) Int. Cl.: C01B 25/37, C01B 25/45, H01M 4/58, H01M 10/0525

(54) **LAMELLAR IRON PHOSPHATE HAVING HIGH IRON-TO-PHOSPHORUS RATIO, PREPARATION METHOD THEREFOR, POSITIVE ELECTRODE MATERIAL AND POSITIVE ELECTRODE PLATE**

(30) Priority: 18.06.2024 CN 202410790348
(71) Applicant: Hubei Hongrun High-Tech New Materials Co., Ltd., Ezhou, Hubei 436070 (CN)
(72) Inventor: XU, Shanwan, Ezhou, Hubei 436070 (CN); GUO, Miyan, Ezhou, Hubei 436070 (CN); FANG, Yuanyuan, Ezhou, Hubei 436070 (CN); LI, Wenjie, Ezhou, Hubei 436070 (CN); ZHANG, Wei, Ezhou, Hubei 436070 (CN); GU, Wenjie, Ezhou, Hubei 436070 (CN); CHENG, Qiang, Ezhou, Hubei 436070 (CN)
(74) Representative: Michalski Hüttermann & Partner Patentanwälte mbB
(86) International application number: PCT/CN2024/108317
(87) International publication number: WO 2025/260452

(57) **Abstract**

The present disclosure relates to a sheet shaped ferric phosphate with a high iron-to-phosphorus ratio and a preparation method thereof, a cathode material, and a cathode plate. The sheet shaped ferric phosphate with a high iron-to-phosphorus ratio has a sheet shaped structure with an iron-to-phosphorus (Fe/P) ratio greater than 0.99, a ratio of length to width to thickness of the sheet shaped structure is (105 to 130):(90 to 100):(10 to 12), 3.5 m²/g ≤ a specific surface area of the sheet shaped structure ≤ 6.5 m²/g, and a particle size of the sheet shaped structure < 35 µm.

## Description

### RELATED APPLICATIONS

This application claims priority to Chinese patent application No. 202410790348.9, filed on June 18, 2024, entitled "SHEET SHAPED FERRIC PHOSPHATE WITH HIGH IRON-TO-PHOSPHORUS RATIO AND PREPARATION METHOD THEREOF, CATHODE MATERIAL AND CATHODE PLATE", the content of which is hereby incorporated by reference in its entirety.

### TECHNICAL FIELD

The present disclosure relates to the technical field of battery materials, in particular to sheet shaped ferric phosphate with a high iron-to-phosphorus ratio and a preparation method thereof, a cathode material, and a cathode plate.

### BACKGROUND

The existing production processes for ferric phosphate mainly include three methods: (1) the ammonium method, (2) the sodium method, and (3) the iron method. The iron method involves first reacting iron powder with phosphoric acid, and then oxidizing the resultant with a hydrogen peroxide solution to obtain ferric phosphate. Compared with the ammonium method and the sodium method, the iron method has the advantages of shorter process flow, no by-products, and the least investments in equipment and environmental protection under the same production capacity. At present, the iron method is attracting more and more attentions in the industry for the preparation of ferric phosphate.

The main issues existing in dominant iron methods for preparing ferric phosphate in the market are: (1) a low iron-to-phosphorus ratio (i.e., the molar ratio of iron element to phosphorus element), approximately in a range from 0.96 to 0.98, and (2) difficulty in controlling the morphology, or non-uniformity in sizes.

Therefore, there is an urgent need to provide a new method for preparing ferric phosphate to address the above technical problems.

### SUMMARY

In view of this, according to various embodiments of the present disclosure, sheet shaped ferric phosphate with a high iron-to-phosphorus ratio, a preparation method thereof, a cathode material, and a cathode plate are provided. The technical solutions are as follow:

In a first aspect, an embodiment of the present disclosure provides sheet shaped ferric phosphate with a high iron-to-phosphorus ratio, wherein the sheet shaped ferric phosphate with a high iron-to-phosphorus ratio is a sheet shaped structure with the iron-to-phosphorus (Fe/P) ratio greater than 0.99, a ratio of length to width to thickness of the sheet shaped structure is (105 to 130):(90 to 100):(10 to 12), 3.5 m²/g ≤ a specific surface area of the sheet shaped structure ≤ 6.5 m²/g, and a particle size of the sheet shaped structure < 35 µm.

In a second aspect, an embodiment of the present disclosure provides a method for preparing sheet shaped ferric phosphate with a high iron-to-phosphorus ratio, including steps of:

providing a first ferrous dihydrogen phosphate solution and a second ferrous dihydrogen phosphate solution;

heating the first ferrous dihydrogen phosphate solution to a temperature, then dropwisely adding an oxidant for a first dropwise addition time period, and holding the temperature after the dropwise addition is completed, to obtain a seed crystal slurry;

adding the seed crystal slurry into the second ferrous dihydrogen phosphate solution and heating to a temperature, then dropwisely adding the oxidant for a second dropwise addition time period, and holding the temperature after the dropwise addition is completed, to obtain an ferric phosphate dihydrate slurry; and

subjecting the ferric phosphate dihydrate slurry to filtration, washing, drying, and sintering in sequence to obtain the sheet shaped ferric phosphate (i.e., anhydrous ferric phosphate) with a high iron-to-phosphorus ratio;

wherein the first dropwise addition time period is shorter than the second dropwise addition time period.

In some embodiments, a concentration of each of the first ferrous dihydrogen phosphate solution and the second ferrous dihydrogen phosphate solution is in a range from 0.7 mol/L to 1.1 mol/L, and the first ferrous dihydrogen phosphate solution and the second ferrous dihydrogen phosphate solution are each prepared by steps of:

reacting dilute phosphoric acid with iron powder to obtain a slurry, and filtering the slurry after the reaction is completed to obtain the first ferrous dihydrogen phosphate solution or the second ferrous dihydrogen phosphate solution, wherein a mass percentage of phosphoric acid in the dilute phosphoric acid is in a range from 20% to 35%, and a molar ratio of the iron powder to the phosphoric acid is in a range from 0.35:1 to 0.5:1.

In some embodiments, the seed crystal slurry is prepared by steps as follows: heating the first ferrous dihydrogen phosphate solution to atemperature ranged from 70°C to 90°C, then dropwisely adding the oxidant uniformly, and holding the temperature for 60 minutes (min) to 120 min after the dropwise addition is completed, to obtain the seed crystal slurry, wherein the first dropwise addition time period is in a range from 5 min to 15 min.

In some embodiments, the ferric phosphate dihydrate slurry is prepared by steps as follows: adding the seed crystal slurry into the second ferrous dihydrogen phosphate solution and heating to atemperature ranged from 70 °C to 90 °C, then dropwisely adding the oxidant uniformly, and holding the temperature for 60 min to 120 min after the dropwise addition is completed, to obtain the ferric phosphate dihydrate slurry, wherein the second dropwise addition time period is in a range from 30 min to 90 min.

In some embodiments, in the step of preparing the seed crystal slurry and the step of preparing the ferric phosphate dihydrate slurry, a molar ratio of the oxidant to divalent iron is in a range from 0.6:1 to 0.9:1; the oxidant is selected from the group consisting of a hydrogen peroxide solution, ammonium persulfate, sodium persulfate, and any combination thereof.

In some embodiments, the washing is countercurrent washing, and the washing is performed until a conductivity of the deionized water after the washing is less than or equal to 200 µS/cm; the drying is performed at a temperature in a range from 90 °C to 110 °C for 8 hours (h) to 24 h; and the sintering is performed at a temperature in a range from 600 °C to 700 °C for 2 h to 4 h.

In a third aspect, an embodiment of the present disclosure provides a lithium iron phosphate cathode material, wherein the lithium iron phosphate cathode material is prepared by uniformly mixing the sheet shaped ferric phosphate with a high iron-to-phosphorus ratio provided in the first aspect of the present disclosure and a lithium source to obtain a mixed material, and then forming the mixed material into the lithium iron phosphate cathode material through a high-temperature solid-phase method.

In a fourth aspect, an embodiment of the present disclosure provides a cathode plate, including the lithium iron phosphate cathode material provided in the third aspect of the present disclosure.

In a fifth aspect, an embodiment of the present disclosure provides a secondary battery, including the cathode plate provided in the fourth aspect of the present disclosure.

Details of one or more embodiments of the present disclosure are set forth in the accompanying drawings and description below. Other features, objects, and advantages of the present disclosure will become apparent from the description, drawings, and claims

### BRIEF DESCRIPTION OF THE DRAWINGS

In order to illustrate the technical solutions in the embodiments of the present disclosure or conventional art more clearly, the drawings used in the embodiments or the conventional art will be briefly described below. Apparently, the drawings described below are merely for some embodiments of the present disclosure. For those of ordinary skill in the art, other drawings can be obtained according to the disclosed drawings without any creative effort.
FIG. 1 shows a flow chart of a method for preparing sheet shaped ferric phosphate with a high iron-to-phosphorus ratio according to an embodiment of the present disclosure.
FIG. 2 shows a scanning electron microscope (SEM) image of sheet shaped ferric phosphate with a high iron-to-phosphorus ratio prepared in Example 1 of the present disclosure.
FIG. 3 shows an SEM image of sheet shaped ferric phosphate with a high iron-to-phosphorus ratio prepared in Example 2 of the present disclosure.
FIG. 4 shows an SEM image of sheet shaped ferric phosphate with a high iron-to-phosphorus ratio prepared in Example 3 of the present disclosure.
FIG. 5 shows an SEM image of sheet shaped ferric phosphate with a high iron-to-phosphorus ratio prepared in Example 4 of the present disclosure.
FIG. 6 shows an SEM image of sheet shaped ferric phosphate with a high iron-to-phosphorus ratio prepared in Example 5 of the present disclosure.
FIG. 7 shows an SEM image of ferric phosphate prepared in Comparative Example 1 of the present disclosure.
FIG. 8 shows an SEM image of ferric phosphate prepared in Comparative Example 2 of the present disclosure.
FIG. 9 shows an SEM image of ferric phosphate prepared in Comparative Example 3 of the present disclosure.

### DETAILED DESCRIPTION

The technical solutions according to the embodiments of the present disclosure will be described more clearly and comprehensively below in conjunction with the accompanying drawings for the embodiments of the present disclosure. Apparently, the embodiments described herein are only some rather than all of the embodiments of the present disclosure. Base on the embodiments of the present disclosure, other embodiments obtained by those of ordinary skill in the art without creative efforts shall fall within the protection scope of the present disclosure.

Unless otherwise defined, all technical and scientific terms used herein have the same meaning as commonly understood by those of ordinary skill in the art to which the present disclosure pertains. The terms used in the specification of the present disclosure herein are for the purpose of describing specific embodiments only and are not intended to limit the present disclosure. The terms "include", "have", and any variations thereof in the specification, claims, and the above drawing description of the present disclosure are intended to encompass non-exclusive inclusions.

The technical terms "first" and "second" mentioned in the description of the embodiments of the present disclosure are merely used for distinguishing different objects, and cannot be construed as indicating or implying a relative importance, or implicitly specifying the number, specific order or primary-secondary relationship of the indicated technical features. In the description of the present disclosure, "a plurality of" means two or more, unless otherwise defined explicitly and specifically.

The wording "embodiment" referred to herein means that specific features, structures, or characteristics described with reference to the embodiment can be included in at least one embodiment of the present disclosure. The wording "embodiment" appeared in various places in the specification does not necessarily refer to the same embodiment or an independent or alternative embodiment that is mutually exclusive with other embodiments. It can be explicitly and implicitly understood by those skilled in the art that the embodiments described herein can be combined with other embodiments.

The term "and/or" mentioned in the description of the embodiments of the present disclosure merely describes a relationship between associated objects, indicating that three types of relationships may exist. For example, A and/or B can indicate three situations: only A exists, both A and B exist, and only B exists. In addition, the character "/" herein generally represents that the former and later associated objects are in an "or" relationship.

The term "multiple" mentioned in the description of the embodiments of the present disclosure, means two or more. Similarly, "multiple groups" means two or more groups, and "multiple pieces" means two or more pieces.

The main issues existing in the iron methods for preparing ferric phosphate are as follows: (1) The ratio of iron to phosphorus is low, approximately in a range from 0.96 to 0.98; the ratio of iron to phosphorus mainly reflects the purity of ferric phosphate, and the higher the purity, the fewer the side reactions in the preparation process of lithium iron phosphate. (2) The morphology is difficult to be controlled, mainly because the oxidation rate is difficult to be controlled, and scattered flaky structures or large octahedral primary particles are easily formed. The scattered sheet shaped structures have a large specific surface area, which is not conducive to controlling the grinding particle size during the preparation of lithium iron phosphate, leading to uneven particle size distribution and poor processing performance, such as powder shedding during the coating process of lithium iron phosphate. The large octahedral primary particles have a small specific surface area, which is not conducive to the intercalation and deintercalation of lithium ions.

In order to address the technical issues of low iron-to-phosphorus ratio, non-uniform morphology and sizes, and over large or over small specific surface area existing in the iron methods for preparing ferric phosphate in the prior art, the present disclosure provides a sheet shaped ferric phosphate with a high iron-to-phosphorus ratio and a preparation method thereof, a cathode material, and a cathode plate. In the method for preparing the sheet shaped ferric phosphate with a high iron-to-phosphorus ratio according to the present application, sheet shaped ferric phosphate as primary particles with a scattered morphology are firstly obtained through a rapid oxidation process. Then, the sheet shaped ferric phosphate as the primary particles are used as seed crystals, and a small amount of the seed crystals is added in advance during the synthesis of ferric phosphate. Moreover, the formation rate of ferric phosphate in the system is controlled through a slow oxidation process, allowing ferric phosphate to be formed in the system to grow and refine on the sheet shaped structure of the seed crystals, thereby obtaining ferric phosphate with a regular morphology, a uniform size, and a more complete crystal growth. Moreover, the resulting ferric phosphate has a relative high iron-to-phosphorus ratio (closer to the theoretical value of 1.0) and a moderate specific surface area. The cathode material prepared from the sheet shaped ferric phosphate with a high iron-to-phosphorus ratio exhibits excellent processability and has a high compaction density, which in turn improves the processability and energy density performance of the cathode plate and the secondary battery.

In a first aspect, an embodiment of the present disclosure provides a sheet shaped ferric phosphate with a high iron-to-phosphorus ratio, wherein the sheet shaped ferric phosphate with a high iron-to-phosphorus ratio is a sheet shaped structure with the iron-to-phosphorus (Fe/P) ratio greater than 0.99, a ratio of length to width to thickness of the sheet shaped structure is (105 to 130):(90 to 100):(10 to 12), 3.5 m²/g ≤ a specific surface area of the sheet shaped structure ≤ 6.5 m²/g, and a particle size of the sheet shaped structure < 35 µm

In the present disclosure, the Fe/P ratio of the sheet shaped ferric phosphate with a high iron-to-phosphorus ratio is further preferably in a range from 0.9924 to 1.0000, including but not limited to 0.9924, 0.9925, 0.9930, 0.9935, 0.9940, 0.9945, 0.9950, 0.9955, 0.9960, 0.9965, 0.9970, 0.9975, 0.9980, 0.9985, 0.9990, or 1.0000.

In the present disclosure, the length of the sheet shaped structure is further preferably in a range from 1050 nm to 1300 nm, including but not limited to 1050 nm, 1080 nm, 1100nm, 1120 nm, 1150 nm, 1180 nm, 1200 nm, 1220 nm, 1250 nm, 1280 nm, or 1300 nm.

In the present disclosure, the width of the sheet shaped structure is further preferably in a range from 900 nm to 1000 nm, including but not limited to 900 nm, 910 nm, 920 nm, 930 nm, 940 nm, 950 nm, 960 nm, 970 nm, 980 nm, 990 nm, or 1000 nm.

In the present disclosure, the thickness of the sheet shaped structure is further preferably in a range from 100 nm to 111 nm, including but not limited to 100 nm, 101 nm, 102 nm, 103 nm, 104 nm, 105 nm, 106 nm, 107 nm, 108 nm, 109 nm, 110 nm, or 111 nm.

In the present disclosure, the specific surface area of the sheet shaped ferric phosphate with a high iron-to-phosphorus ratio is further preferably in a range from 3.97 m²/g to 6.22 m²/g, including but not limited to 3.97 m²/g, 4.00 m²/g, 4.20 m²/g, 4.40 m²/g, 4.60 m²/g, 4.80 m²/g, 5.00 m²/g, 5.20 m²/g, 5.40 m²/g, 5.60 m²/g, 5.80 m²/g, 6.00 m²/g, 6.20 m²/g, or 6.22m²/g.

In the present disclosure, the D 100 size of the sheet shaped ferric phosphate with a high iron-to-phosphorus ratio is further preferably in a range from 26.94 µm to 34.95 µm, including but not limited to 26.94 nm, 27.00 µm, 27.50 µm, 28.00 µm, 28.50 µm, 29.00 µm, 29.50 µm, 30.00 µm, 30.50 µm, 31.00 µm, 31.50 µm, 32.00 µm, 32.50 µm, 33.00 µm, 33.50 µm, 34.00 µm, 34.50 µm, or 34.95µm.

The sheet shaped ferric phosphate with a high iron-to-phosphorus ratio according to the present disclosure has a regular morphology, a uniform size, a more complete crystal growth, a relative high iron-to-phosphorus ratio (closer to the theoretical value of 1.0), a moderate specific surface area, and a relatively small particle size. Under the sheet shaped microstructure, the migration path of lithium ions becomes relatively short, facilitating the de-intercalation and intercalation of lithium ions, thereby enhancing the electrochemical performance of the lithium iron phosphate cathode material. The small particle size is beneficial to shorten the ball milling time in the preparation process of lithium iron phosphate, thereby improving the efficiency. The cathode material prepared from this precursor has an excellent processability and a high compaction density.

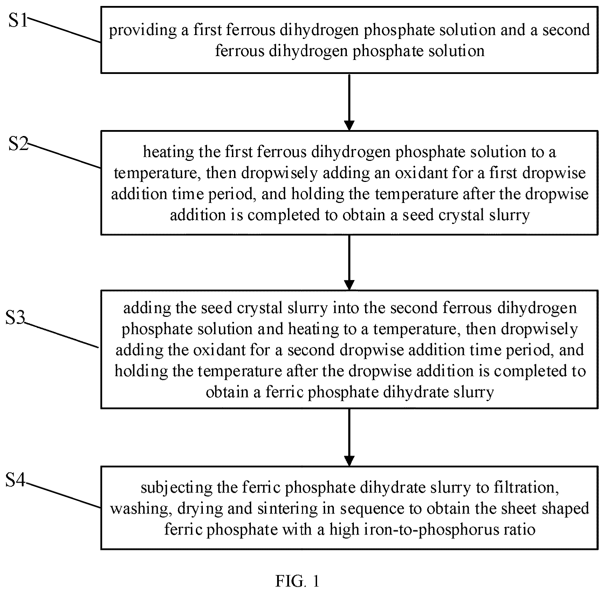

Referring to FIG. 1, in a second aspect, an embodiment of the present disclosure provides a method for preparing a sheet shaped ferric phosphate with a high iron-to-phosphorus ratio, including the following steps:

S1: providing a first ferrous dihydrogen phosphate solution and a second ferrous dihydrogen phosphate solution;

S2: heating the first ferrous dihydrogen phosphate solution to a temperature, then dropwisely adding an oxidant for a first dropwise addition time period, and holding the temperature after the dropwise addition is completed, to obtain a seed crystal slurry;

S3: adding the seed crystal slurry into the second ferrous dihydrogen phosphate solution and heating to a temperature, then dropwisely adding the oxidant for a second dropwise addition time period, and holding the temperature after the dropwise addition is completed, to obtain an ferric phosphate dihydrate slurry; and

S4: subjecting the ferric phosphate dihydrate slurry to filtration, washing, drying, and sintering in sequence to obtain the sheet shaped ferric phosphate (i.e., anhydrous ferric phosphate) with a high iron-to-phosphorus ratio;

wherein the first dropwise addition time period is shorter than the second dropwise addition time period.

To address the issues of low iron-to-phosphorus ratio, non-uniform morphology and sizes, and over large or over small specific surface area existing in the iron methods for preparing ferric phosphate in the prior art, in the present disclosure, sheet shaped ferric phosphate as the primary particles with a scattered morphology are firstly obtained through a rapid oxidation process. Then, the sheet shaped ferric phosphate as the primary particles are used as seed crystals, and a small amount of the seed crystals is added in advance during the synthesis of ferric phosphate, so as to reduce the nucleation potential energy of the sheet shaped ferric phosphate in the reaction system, making the ferric phosphate formed in the system have the sheet shaped structure instead of the octahedral structure with similar nucleation potential energy. Moreover, the formation rate of ferric phosphate in the system is controlled through a slow oxidation process, allowing ferric phosphate to be formed in the system to grow and refine on the sheet shaped structure of the seed crystals, thus obtaining the sheet shaped ferric phosphate with a regular morphology, a uniform size, and a more complete crystal growth, thereby allowing the resulting ferric phosphate to have a relative high iron-to-phosphorus ratio (closer to the theoretical value of 1.0) and a moderate specific surface area. As such, the issues of low iron-to-phosphorus ratio, non-uniform morphology and sizes, and over large or over small specific surface area existing the iron methods for preparing ferric phosphate in the prior art are addressed.

In the technical solutions of the embodiments of the present disclosure, the time periods for dropwisely adding the oxidant in steps S2 and S3 have significant influences on the micromorphology and crystal structure of the finally obtained sheet shaped ferric phosphate with the high iron-phosphate ratio. Specifically, without seed crystals, if the oxidation is too slow, the crystal nuclei are insufficient in the system, making the precipitate formed in the oxidation process continue to grow on the original crystal nuclei, and gradually grow into octahedral structures from irregular sheets. The specific process is from irregular sheet shaped structures to regular sheet shaped structures to octahedral structures. However, the formation conditions of regular sheet shaped structures are strict, and are difficult to be controlled without seed crystals, and with a prolonged oxidation time, the irregular sheet shaped structures are directly transformed to the octahedral structures. With an appropriate amount of seed crystals, the system contains a sufficient number of crystal nuclei, allowing the precipitate formed during oxidation to grow on the seed crystals, refining the structures of the seed crystals, so as to obtain sheet shaped structures with a regular morphology. Therefore, in step S2 of the present disclosure, a relatively short dropwise addition time period is employed, leading to rapid oxidation, thereby forming a large number of nuclei in the system. The crystal nuclei are formed too quickly to grow, thereby generating a large number of irregular sheet shaped structures. In step S3, a relatively long dropwise addition time period is employed, allowing the hydrogen peroxide solution to be slowly dropwisely added to form oxidation precipitate, so that the generated precipitate continues to grow on the seed crystals, thereby obtaining regular sheet shaped structures. If the dropwise addition time period is too short, too much precipitate forms in a short time, leading to aggregation and affecting the microstructure, thus making the obtained ferric phosphate has an irregular sheet shaped structure with a large specific surface area.

It can be understood that, in the present disclosure, the first ferrous dihydrogen phosphate solution and the second ferrous dihydrogen phosphate solution can be the same or different, which is not limited, and can be decided by those skilled in the art according to actual conditions.

Further, in some embodiments, in step S1, a concentration of each of the first ferrous dihydrogen phosphate solution and the second ferrous dihydrogen phosphate solution is in a range from 0.7 mol/L to 1.1 mol/L, including but not limited to, 0.7 mol/L, 0.8 mol/L, 0.9 mol/L, 1.0 mol/L, 1.1 mol/L, etc., which is not limited herein.

In the technical solutions of the embodiments of the present disclosure, by controlling the concentrations of the first ferrous dihydrogen phosphate solution and the second ferrous dihydrogen phosphate solution within the above ranges, it can be ensured that the first ferrous dihydrogen phosphate solution and the second ferrous dihydrogen phosphate solution in the system are not easily to crystallize, which is beneficial to process control. In addition, the mother liquor has a small volume. If the concentration is too high, the ferrous solution will have a high viscosity and is easy to crystallize. If the concentration is too low, a large volume of mother liquor needs to be processed, which is not conducive to industrial scale-up.

Further, in some embodiments, in step S1, the first ferrous dihydrogen phosphate solution or the second ferrous dihydrogen phosphate solution is prepared by steps including:

reacting dilute phosphoric acid with iron powder to obtain a slurry, and filtering the slurry after the reaction is completed to obtain the first ferrous dihydrogen phosphate solution or the second ferrous dihydrogen phosphate solution.

In the technical solutions of the embodiments of the present disclosure, unreacted iron can be removed by the filtration step.

Furthermore, in some embodiments, a mass percentage of phosphoric acid in the dilute phosphoric acid is in a range from 20% to 35%, including but not limited to, 20%, 25%, 30%, 35%, etc., which is not limited in the present disclosure.

Furthermore, in some specific embodiments, the dilute phosphoric acid is obtained by diluting refined phosphoric acid with a mass percentage greater than or equal to 75% with pure water.

Furthermore, in some embodiments, a molar ratio of the iron powder to the phosphoric acid is in a range from 0.35:1 to 0.5:1, including but not limited to, 0.35:1, 0.4:1, 0.45:1, 0. 5:1, etc., which is not limited in the present disclosure.

In the technical solutions of the embodiments of the present disclosure, by controlling the molar ratio of the iron powder to the phosphoric acid within the above range, divalent iron can be more stable under the acidic condition. If the iron powder is excessive, the pH value of the ferrous dihydrogen phosphate solution obtained is too high, causing divalent iron to be easily oxidized.

In the present disclosure, it should be noted that, the complete reaction system of the iron powder and the phosphoric acid refers to a reaction system in which the iron powder and the phosphoric acid completely react to generate ferrous dihydrogen phosphate. The specific reaction equation is as follows:

Fe+2H₃PO₄→Fe(H₂PO₄)₂+H₂.

Furthermore, in some embodiments, during the reaction between the iron powder and the dilute phosphoric acid, the reaction temperature is in a range from 55 °C to 70 °C, including but not limited to, 55 °C, 60 °C, 65 °C, 70 °C, etc., which is not limited in the present disclosure.

Furthermore, in some embodiments, the end point of the reaction between the dilute phosphoric acid and the iron powder is as follows: the pH value of the system is greater than 1.45, and the content of divalent iron is greater than 1.3 mol/L.

Furthermore, in some embodiments, the steps of preparing the first ferrous dihydrogen phosphate solution or the second ferrous dihydrogen phosphate solution further include: diluting the filtrate to a target concentration.

In the technical solutions of the embodiments of the present disclosure, the concentration of the ferrous dihydrogen phosphate solution can be controlled within a target range by diluting the filtrate.

Further, in some embodiments, in step S1, providing the first ferrous dihydrogen phosphate solution or the second ferrous dihydrogen phosphate solution includes:
heating the dilute phosphoric acid to a reaction temperature, then adding the iron powder into the dilute phosphoric acid, filtering the slurry after the reaction is completed, and then diluting the filtrate to obtain the first ferrous dihydrogen phosphate solution or the second ferrous dihydrogen phosphate solution.

Further, in some embodiments, in step S2, a molar ratio of the oxidant to divalent iron is in a range from 0.6:1 to 0.9:1, including but not limited to, 0.6:1, 0.7:1, 0.8:1, 0.9:1, etc., which is not limited in the present disclosure.

In the technical solutions of the embodiments of the present disclosure, by controlling the addition amount of the oxidant within the above range, Fe²⁺ can be sufficiently oxidized, avoiding the oxidant to be wasted.

Further, in some embodiments, in step S2, the oxidant is selected from the group consisting of a hydrogen peroxide solution, ammonium persulfate, sodium persulfate, and any combination thereof.

Further, in some embodiments, in step S2, the oxidant is the hydrogen peroxide solution. The mass percentage of hydrogen peroxide in the hydrogen peroxide solution used herein is not limited, and those skilled in the art can decide according to actual conditions. In some specific embodiments, the mass percentage of hydrogen peroxide in the hydrogen peroxide solution is in a range from 20% to 30%, including but not limited to 20%, 22%, 24%, 26%, 28%, 30%, etc., which is not limited in the present disclosure.

Further, in some embodiments, in step S2, the first ferrous dihydrogen phosphate solution is heated to the temperature in a range from 70 °C to 90 °C, including but not limited to 70 °C, 75 °C, 80 °C, 85 °C, 90 °C, etc., which is not limited in the present disclosure. The oxidant is then added dropwisely and uniformly, and the first dropwise addition time period is in a range from 5 min to 15 min, including but not limited to 5 min, 7 min, 9 min, 11 min, 13 min, 15 min, etc., which is not limited in the present disclosure. After the dropwise addition is completed, the system is held at the temperature for 60 min to 120 min, including but not limited to, 60 min, 70 min, 80 min, 90 min, 100 min, 110 min, 120 min, etc., to obtain the seed crystal slurry.

In the technical solutions of the embodiments of the present disclosure, by controlling the temperature in step S2 within the above range, crystalline ferric phosphate dihydrate can be formed in one step within the system. If the temperature is too high, the slurry may boil during the dropwise addition of the oxidant, so that the dropwise addition operation is difficult to be performed, and the oxidant is seriously decomposed. In contrast, if the temperature is too low, the slurry may not undergo completely crystal transformation, or the process may take too long. In addition, in the present disclosure, by controlling the dropwise addition time period within the above range, ferric phosphate dihydrate seed crystals having an irregular sheet shaped structure can be obtained. If the dropwise addition time period is too short, the local concentration of the oxidant in the reaction solution may be too high. As a result, the local temperature rises too high, and the hydrogen peroxide solution is violently decomposed. If the dropwise addition time period is too long, ferric phosphate with a block structure may be formed, and the ferric phosphate seed crystals with the expected sheet shaped structure may not be obtained. Further, in the present disclosure, by controlling the temperature holding time within the above range, the reaction can be completed while a long reaction time can be avoided. If the temperature holding time is too short, the system may not be completely reacted, and if the temperature holding time is too long, the production rhythm may be affected.

Further, in some embodiments, in step S3, the addition amount of the seed crystal slurry is 5% to 15% by mass of the second ferrous dihydrogen phosphate solution, including but not limited to 5%, 7%, 9%, 11%, 13%, 15%, etc., which is not limited in the present disclosure.

In the technical solutions of the embodiments of the present disclosure, by controlling the addition amount of the seed crystal slurry within the above range, desired sheet shaped crystals can be obtained, avoiding the formation of other crystal forms. If the addition amount of the seed crystal slurry is too high, the crystallinity may decrease, resulting in irregular sheet shaped crystals. If the addition amount of the seed crystal slurry is too low, other crystal forms (such as an orthorhombic structure with an octahedral micromorphology) may be formed.

Further, in some embodiments, in step S3, a molar ratio of the oxidant to divalent iron is in a range from 0.6:1 to 0.9:1, including but not limited to, 0.6:1, 0.7:1, 0.8:1, 0.9:1, etc., which is not limited in the present disclosure.

In the technical solutions of the embodiments of the present disclosure, by controlling the addition amount of the oxidant within the above range, Fe²⁺ can be sufficiently oxidized, avoiding the oxidant to be wasted.

Further, in some embodiments, in step S3, the oxidant is selected from the group consisting of a hydrogen peroxide solution, ammonium persulfate, sodium persulfate, and any combination thereof.

Further, in some preferred embodiments, in step S3, the oxidant is the hydrogen peroxide solution. The mass percentage of hydrogen peroxide in the hydrogen peroxide solution used herein is not limited, and those skilled in the art can decide according to actual conditions. In some specific embodiments, the mass percentage of hydrogen peroxide in the hydrogen peroxide solution is in a range from 20% to 30%, including but not limited to 20%, 22%, 24%, 26%, 28%, 30%, etc., which is not limited in the present disclosure.

Further, in some embodiments, in step S3, the seed crystal slurry is added into the second ferrous dihydrogen phosphate solution and heated to the temperature in a range from 70 °C to 90 °C, including but not limited to 70 °C, 75 °C, 80 °C, 85 °C, 90 °C, etc., which is not limited in the present disclosure. The oxidant is then added dropwisely and uniformly, and the second dropwise addition time period is in a range from 30 min to 90 min, including but not limited to 30 min, 40 min, 50 min, 60 min, 70 min, 80 min, 90 min, etc., which is not limited in the present disclosure. After the dropwise addition is completed, the system is held at the temperature for 60 min to 120 min, including but not limited to, 60 min, 70 min, 80 min, 90 min, 100 min, 110 min, 120 min, etc., to obtain the ferric phosphate dihydrate slurry.

In the embodiments, by controlling the temperature within the above range, crystalline ferric phosphate dihydrate can be formed in one step within the system. If the temperature is too high, the solution may boil during the dropwise addition of the oxidant, so that the dropwise addition operation is difficult to be performed, and the oxidant is seriously decomposed. In contrast, if the temperature is too low, the slurry may not undergo completely crystal transformation, or the process may take too long. By controlling the dropwise addition time period within the above range, the formed ferric phosphate precipitate can have sufficient growth time on the seed crystals as a base, making the ferric phosphate prepared have a regular morphology. If the dropwise addition time period is too short, the precipitation may be too fast, making the ferric phosphate precipitate impossible to fully grow based on the seed crystals, and impossible to result in a regular morphology. If the dropwise addition time period is too long, the crystals may grow abnormally, reducing the specific surface area. By controlling the temperature holding time within the above range, the reaction can be completed while a long reaction time can be avoided. If the temperature holding time is too short, the system may not be completely reacted, and if the temperature holding time is too long, the production rhythm may be affected.

Further, in some embodiments, in step S4, the washing is countercurrent washing.

Furthermore, in some embodiments, in step S4, the washing is performed until a conductivity of the deionized water after the washing is less than or equal to 200 µS/cm.

In the technical solutions of the embodiments of the present disclosure, by performing the washing until the conductivity of the deionized water after the washing is less than or equal to 200 µS/cm, impurity ions (mainly phosphate ions) can be removed well from the slurry.

Furthermore, in some embodiments, in step S4, the temperature of the drying is in a range from 90 °C to 110 °C, including but not limited to, 90 °C, 95 °C, 100 °C, 105 °C, 110 °C, etc., which is not limited herein; the time period of the drying is in a range from 8 h to 24 h, including but not limited to, 8 h, 12 h, 16 h, 20 h, 24 h, etc., which is not limited in the present disclosure.

Furthermore, in some embodiments, in step S4, the temperature of the sintering is in a range from 600 °C to 700 °C, including but not limited to, 600 °C, 620 °C, 640 °C, 660 °C, 680 °C, 700 °C, etc., which is not limited herein; the time period of the sintering is in a range from 2 h to 4 h, including but not limited to, 2 h, 2.5 h, 3 h, 3.5 h, 4 h, etc., which is not limited in the present disclosure.

In the technical solutions of the embodiments of the present disclosure, by controlling the sintering temperature and the sintering time within the above ranges, the ferric phosphate dihydrate can be formed into the sheet shaped ferric phosphate with a high iron-to-phosphorus ratio through the high-temperature sintering. If the sintering temperature is lower than 600 °C, pure phase of anhydrous ferric phosphate cannot be obtained; and if the sintering temperature is higher than 700 °C, a quartz-type structure with a low chemical activity will be formed.

In a third aspect, an embodiment of the present disclosure provides a lithium iron phosphate cathode material, wherein the lithium iron phosphate cathode material is prepared by uniformly mixing the sheet shaped ferric phosphate with a high iron-to-phosphorus ratio provided in the first aspect of the present disclosure and a lithium source to obtain a mixed material, and then forming the mixed material into the lithium iron phosphate cathode material through a high-temperature solid-phase method.

Since the lithium iron phosphate cathode material according to the present disclosure is prepared from the sheet shaped ferric phosphate with a high iron-to-phosphorus ratio as described above, the lithium iron phosphate cathode material has an excellent processability and a high energy density.

In a fourth aspect, an embodiment of the present disclosure provides a cathode plate, including the lithium iron phosphate cathode material provided in the third aspect of the present disclosure.

Since the cathode plate includes the lithium iron phosphate cathode material as described above, the cathode plate has an excellent processability and a high energy density.

In a fifth aspect, an embodiment of the present disclosure provides a secondary battery, including the cathode plate provided in the fourth aspect of the present disclosure.

Since the secondary battery includes the cathode plate as described above, the secondary battery has an excellent processability and a high energy density.

The embodiments of the present disclosure will be described in detail below. It should be understood that the embodiments described below are exemplary, and are only intended to explain the present disclosure rather than being construed as limitation to the present disclosure. Where specific techniques or conditions are not indicated in the examples, the procedures shall be carried out in accordance with the techniques or conditions described in the literatures in the field or in accordance with the product specification. The reagents or instruments for which no manufacturers are noted are all common products commercially available from the market.

### Preparation method

### Example 1

(1) Preparation of ferrous dihydrogen phosphate: Pure water is added into refined phosphoric acid (with a mass percentage of 85%) to prepare a dilute phosphoric acid solution with a mass percentage of 30% for later use. The dilute phosphoric acid solution is heated to 65 °C. Once the temperature is reached, an appropriate amount of high-purity iron powder (with a purity of 99.2%, n_{Fe}/n_{H_{3PO4}} = 0.4:1.0) is added into the dilute phosphoric acid solution. When the reaction is completed, the slurry is filtered to obtain a ferrous dihydrogen phosphate solution.
(2) Preparation of seed crystals: The ferrous dihydrogen phosphate solution obtained in step (1) is taken and added with pure water to obtain a ferrous dihydrogen phosphate solution with a molar concentration of 1.0 mol/L. The prepared ferrous dihydrogen phosphate solution is heated to 80 °C. Once the temperature is reached, a hydrogen peroxide solution (with a mass percentage of 25%, n_{H_{2O2}}/n_{Fe}²⁺ = 0.75:1.0) is then added dropwisely and uniformly into the heated ferrous dihydrogen phosphate solution, while the time period for the dropwise addition is controlled to be 10 min. After the dropwise addition is completed, the solution is held at the temperature of 80 °C for 90 min to obtain a seed crystal slurry.
(3) Preparation of ferric phosphate dihydrate: The ferrous dihydrogen phosphate solution obtained in step (1) is taken and added with pure water to obtain a ferrous dihydrogen phosphate solution with a molar concentration of 1.0 mol/L. The seed crystal slurry obtained in step (2) is added into the ferrous dihydrogen phosphate solution. The addition amount of the seed crystal slurry is 10% by mass of the ferrous dihydrogen phosphate solution. After that, the mixed slurry is heated to 80 °C, and a hydrogen peroxide solution (with a mass percentage of 25%, n_{H_{2O2}}/n_{Fe}²⁺ = 0.75:1.0) is then added dropwisely and uniformly into the heated ferrous dihydrogen phosphate solution, while the time period for the dropwise addition is controlled to be 60 min. After the dropwise addition is completed, the solution is held at the temperature of 80 °C for 90 min to obtain a final ferric phosphate dihydrate slurry.
(4) Preparation of sheet shaped ferric phosphate with a high iron-to-phosphorus ratio: The final slurry obtained in step (3) is subjected to filtration, countercurrent washing, drying at 95 °C for 8 h, and sintering at 650 °C for 2 h in sequence to obtain the sheet shaped ferric phosphate with a high iron-to-phosphorus ratio.

### Example 2

(1) Preparation of ferrous dihydrogen phosphate: Pure water is added into refined phosphoric acid (with a mass percentage of 85%) to prepare a dilute phosphoric acid solution with a mass percentage of 35% for later use. The dilute phosphoric acid solution is heated to 70 °C. Once the temperature is reached, an appropriate amount of high-purity iron powder (with a purity of 99.2%, n_{Fe}/n_{H_{3PO4}} = 0.5:1.0) is added into the dilute phosphoric acid solution. When the reaction is completed, the slurry is filtered to obtain a ferrous dihydrogen phosphate solution.
(2) Preparation of seed crystals: The ferrous dihydrogen phosphate solution obtained in step (1) is taken and added with pure water to obtain a ferrous dihydrogen phosphate solution with a molar concentration of 0.7 mol/L. The prepared ferrous dihydrogen phosphate solution is heated to 70 °C. Once the temperature is reached, a hydrogen peroxide solution (with a mass percentage of 20%, n_{H_{2O2}}/n_{Fe}²⁺ = 0.60:1.0) is then added dropwisely and uniformly into the heated ferrous dihydrogen phosphate solution, while the time period for the dropwise addition is controlled to be 5 min. After the dropwise addition is completed, the solution is held at the temperature of 70 °C for 60 min to obtain a seed crystal slurry.
(3) Preparation of ferric phosphate dihydrate: The ferrous dihydrogen phosphate solution obtained in step (1) is taken and added with pure water to obtain a ferrous dihydrogen phosphate solution with a molar concentration of 0.7 mol/L. The seed crystal slurry obtained in step (2) is added into the ferrous dihydrogen phosphate solution. The addition amount of the seed crystal slurry is 5% by mass of the ferrous dihydrogen phosphate solution. After that, the mixed slurry is heated to 70 °C, and a hydrogen peroxide solution (with a mass percentage of 20%, n_{H_{2O2}}/n_{Fe}²⁺ = 0.60:1.0) is then added dropwisely and uniformly into the heated ferrous dihydrogen phosphate solution, while the time period for the dropwise addition is controlled to be 30 min. After the dropwise addition is completed, the solution is held at the temperature of 70 °C for 60 min to obtain a final ferric phosphate dihydrate slurry.
(4) Preparation of sheet shaped ferric phosphate with a high iron-to-phosphorus ratio: The final slurry obtained in step (3) is subjected to filtration, countercurrent washing, drying at 90 °C for 10 h, and sintering at 600 °C for 3 h in sequence to obtain the sheet shaped ferric phosphate with a high iron-to-phosphorus ratio.

### Example 3

(1) Preparation of ferrous dihydrogen phosphate: Pure water is added into refined phosphoric acid (with a mass percentage of 85%) to prepare a dilute phosphoric acid solution with a mass percentage of 25% for later use. The dilute phosphoric acid solution is heated to 55 °C. Once the temperature is reached, an appropriate amount of high-purity iron powder (with a purity of 99.2%, n_{Fe}/n_{H_{3PO4}} = 0.35:1.0) is added into the dilute phosphoric acid solution. When the reaction is completed, the slurry is filtered to obtain a ferrous dihydrogen phosphate solution.
(2) Preparation of seed crystals: The ferrous dihydrogen phosphate solution obtained in step (1) is taken and added with pure water to obtain a ferrous dihydrogen phosphate solution with a molar concentration of 1.1 mol/L. The prepared ferrous dihydrogen phosphate solution is heated to 90 °C. Once the temperature is reached, a hydrogen peroxide solution (with a mass percentage of 30%, n_{H_{2O2}}/n_{Fe}²⁺ = 0.90:1.0) is then added dropwisely and uniformly into the heated ferrous dihydrogen phosphate solution, while the time period for the dropwise addition is controlled to be 15 min. After the dropwise addition is completed, the solution is held at the temperature of 90 °C for 120 min to obtain a seed crystal slurry.
(3) Preparation of ferric phosphate dihydrate: The ferrous dihydrogen phosphate solution obtained in step (1) is taken and added with pure water to obtain a ferrous dihydrogen phosphate solution with a molar concentration of 1.1 mol/L. The seed crystal slurry obtained in step (2) is added into the ferrous dihydrogen phosphate solution. The addition amount of the seed crystal slurry is 15% by mass of the ferrous dihydrogen phosphate solution. After that, the mixed slurry is heated to 90 °C, and a hydrogen peroxide solution (with a mass percentage of 30%, n_{H_{2O2}}/n_{Fe}²⁺ = 0.90:1.0) is then added dropwisely and uniformly into the heated ferrous dihydrogen phosphate solution, while the time period for the dropwise addition is controlled to be 90 min. After the dropwise addition is completed, the solution is held at the temperature of 90 °C for 120 min for a complete reaction to obtain a final ferric phosphate dihydrate slurry.
(4) Preparation of sheet shaped ferric phosphate with a high iron-to-phosphorus ratio: The final slurry obtained in step (3) is subjected to filtration, countercurrent washing, drying at 110 °C for 12 h, and sintering at 700 °C for 2 h in sequence to obtain the sheet shaped ferric phosphate with a high iron-to-phosphorus ratio.

### Example 4

(1) Preparation of ferrous dihydrogen phosphate: Pure water is added into refined phosphoric acid (with a mass percentage of 85%) to prepare a dilute phosphoric acid solution with a mass percentage of 30% for later use. The dilute phosphoric acid solution is heated to 60 °C. Once the temperature is reached, an appropriate amount of high-purity iron powder (with a purity of 99.2%, n_{Fe}/n_{H_{3PO4}} = 0.45:1.0) is added into the dilute phosphoric acid solution. When the reaction is completed, the slurry is filtered to obtain a ferrous dihydrogen phosphate solution.
(2) Preparation of seed crystals: The ferrous dihydrogen phosphate solution obtained in step (1) is taken and added with pure water to obtain a ferrous dihydrogen phosphate solution with a molar concentration of 0.9 mol/L. The prepared ferrous dihydrogen phosphate solution is heated to 85 °C. Once the temperature is reached, a hydrogen peroxide solution (with a mass percentage of 25%, n_{H_{2O2}}/n_{Fe}²⁺ = 0.70:1.0) is then added dropwisely and uniformly into the heated ferrous dihydrogen phosphate solution, while the time period for the dropwise addition is controlled to be 12 min. After the dropwise addition is completed, the solution is held at the temperature of 85 °C for 75 min to obtain a seed crystal slurry.
(3) Preparation of ferric phosphate dihydrate: The ferrous dihydrogen phosphate solution obtained in step (1) is taken and added with pure water to obtain a ferrous dihydrogen phosphate solution with a molar concentration of 0.9 mol/L. The seed crystal slurry obtained in step (2) is added into the ferrous dihydrogen phosphate solution. The addition amount of the seed crystal slurry is 10% by mass of the ferrous dihydrogen phosphate solution. After that, the mixed slurry is heated to 85 °C, and a hydrogen peroxide solution (with a mass percentage of 25%, n_{H_{2O2}}/n_{Fe}²⁺ = 0.70:1.0) is then added dropwisely and uniformly into the heated ferrous dihydrogen phosphate solution, while the time period for the dropwise addition is controlled to be 60 min. After the dropwise addition is completed, the solution is held at the temperature of 85 °C for 75 min to obtain a final ferric phosphate dihydrate slurry.
(4) Preparation of sheet shaped ferric phosphate with a high iron-to-phosphorus ratio: The final slurry obtained in step (3) is subjected to filtration, countercurrent washing, drying at 95 °C for 16 h, and sintering at 650 °C for 3 h in sequence to obtain the sheet shaped ferric phosphate with a high iron-to-phosphorus ratio.

### Example 5

(1) Preparation of ferrous dihydrogen phosphate: Pure water is added into refined phosphoric acid (with a mass percentage of 85%) to prepare a dilute phosphoric acid solution with a mass percentage of 30% for later use. The dilute phosphoric acid solution is heated to 60 °C. Once the temperature is reached, an appropriate amount of high-purity iron powder (with a purity of 99.2%, n_{Fe}/n_{H_{3PO4}} = 0.45:1.0) is added into the dilute phosphoric acid solution. When the reaction is completed, the slurry is filtered to obtain a ferrous dihydrogen phosphate solution.
(2) Preparation of seed crystals: The ferrous dihydrogen phosphate solution obtained in step (1) is taken and added with pure water to obtain a ferrous dihydrogen phosphate solution with a molar concentration of 1.0 mol/L. The prepared ferrous dihydrogen phosphate solution is heated to 90 °C. Once the temperature is reached, a hydrogen peroxide solution (with a mass percentage of 25%, n_{H_{2O2}}/n_{Fe}²⁺ = 0.75:1.0) is then added dropwisely and uniformly into the heated ferrous dihydrogen phosphate solution, while the time period for the dropwise addition is controlled to be 10 min. After the dropwise addition is completed, the solution is held at the temperature of 90 °C for 60 min to obtain a seed crystal slurry.
(3) Preparation of ferric phosphate dihydrate: The ferrous dihydrogen phosphate solution obtained in step (1) is taken and added with pure water to obtain a ferrous dihydrogen phosphate solution with a molar concentration of 1.0 mol/L. The seed crystal slurry obtained in step (2) is added into the ferrous dihydrogen phosphate solution. The addition amount of the seed crystal slurry is 5% by mass of the ferrous dihydrogen phosphate solution. After that, the mixed slurry is heated to 90 °C, and a hydrogen peroxide solution (with a mass percentage of 25%, n_{H_{2O2}}/n_{Fe}²⁺ = 0.75:1.0) is then added dropwisely and uniformly into the heated ferrous dihydrogen phosphate solution, while the time period for the dropwise addition is controlled to be 90 min. After the dropwise addition is completed, the solution is held at the temperature of 90 °C for 60 min to obtain a final ferric phosphate dihydrate slurry.
(4) Preparation of sheet shaped ferric phosphate with a high iron-to-phosphorus ratio: The final slurry obtained in step (3) is subjected to filtration, countercurrent washing, drying at 95 °C for 16 h, and sintering at 650 °C for 2.5 h in sequence to obtain the sheet shaped ferric phosphate with a high iron-to-phosphorus ratio.

### Comparative Example 1

The seed crystal slurry prepared in the preparation of seed crystals in step (2) is used as the final slurry, and subjected to subsequent filtration, washing, drying, and sintering. The other steps and parameters are the same as those in Example 1.

### Comparative Example 2

(3) Preparation of ferric phosphate dihydrate: The ferrous dihydrogen phosphate solution obtained in step (1) is taken and added with pure water to obtain a ferrous dihydrogen phosphate solution with a molar concentration of 1.0 mol/L. A hydrogen peroxide solution (with a mass percentage of 25%, n_{H_{2O2}}/n_{Fe}²⁺ = 0.75:1.0) is then added dropwisely and uniformly into the prepared ferrous dihydrogen phosphate solution, while the time period for the dropwise addition is controlled to be 60 min. The divalent iron in the ferrous dihydrogen phosphate solution is completely oxidized. When the oxidization is completed, the seed crystal slurry obtained in step (2) is added into the solution. The addition amount of the seed crystal slurry is 10% by mass of the solution. After that, the mixed slurry is heated to 80 °C, and held at 80 °C for 90 min to obtain a final ferric phosphate slurry. The other steps and parameters are the same as those in Example 1.

### Comparative Example 3

In the preparation of seed crystals in step (2), the time period for the dropwise addition of the hydrogen peroxide solution is adjusted to 60 min. The other steps and parameters are the same as those in Example 1.

### Test methods

### 1. Scanning electron microscopy (SEM) test

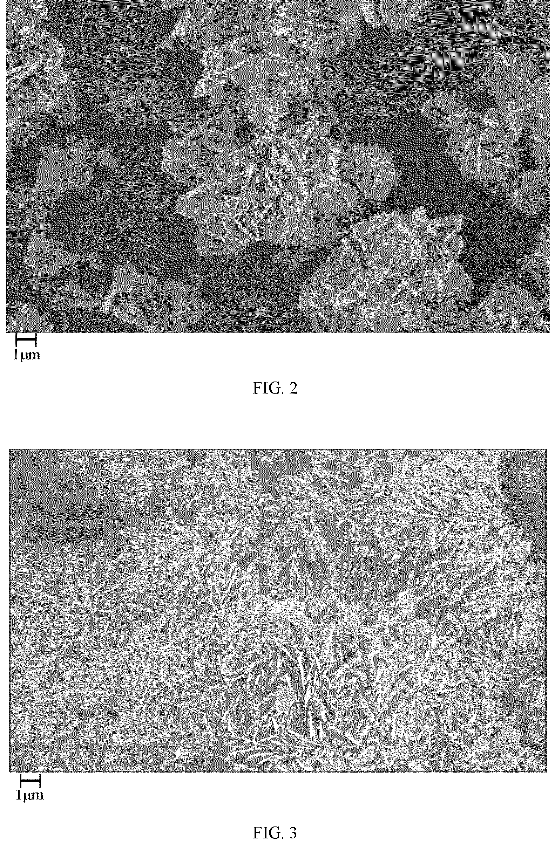

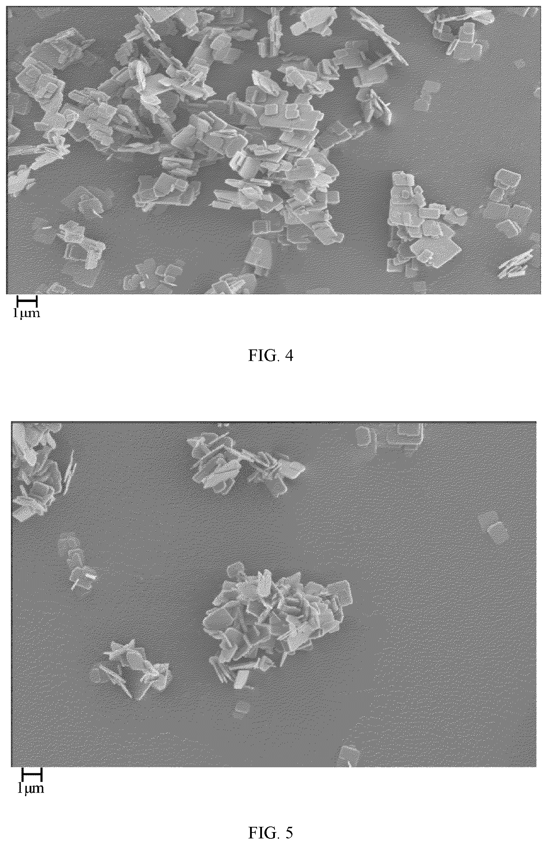

The ferric phosphate products prepared in the examples and comparative examples are subjected to an SEM test, and the test results are shown in FIGS. 2 to 9.

### 2. Fe and P content test

The iron content is measured by a potassium dichromate titration method, and the phosphorus content is measured by a gravimetric method using quinoline phosphomolybdate.

### 3. Specific surface area test

The specific surface area is measured by a nitrogen adsorption method using a specific surface area analyzer.

### 4. Microscopic dimension test

The micro-morphology is observed under a scanning electron microscope.

### 5. D100 test

The particle size is measured by using a Mastersizer laser diffraction particle size analyzer.

### Test results and analysis of examples and comparative examples

**Table 1. Test results of examples and comparative examples**

| No. | Fe | P | Fe/P | Specific surface area |
|---|---|---|---|---|
| | % | % | | m²/g |
| Example 1 | 37.56 | 20.83 | 1.0000 | 4.89 |
| Example 2 | 36.88 | 20.61 | 0.9924 | 6.22 |
| Example 3 | 36.91 | 20.60 | 0.9935 | 5.46 |
| Example 4 | 36.95 | 20.59 | 0.9951 | 5.40 |
| Example 5 | 36.99 | 20.62 | 0.9948 | 3.97 |
| Comparative Example 1 | 36.38 | 20.74 | 0.9728 | 10.67 |
| Comparative Example 2 | 36.90 | 20.94 | 0.9773 | 6.86 |
| Comparative Example 3 | 36.55 | 20.65 | 0.9815 | 1.39 |

**Table 2. Test results of examples and comparative examples**

| No. | Sheet shaped structure | | | D100 (µm) |
|---|---|---|---|---|
| | Length (nm) | Width (nm) | Thickness (nm) | |
| Example 1 | 1130 | 1000 | 100 | 34.761 |
| Example 2 | 1300 | 950 | 110 | 27.168 |
| Example 3 | 1100 | 900 | 105 | 26.944 |
| Example 4 | 1070 | 900 | 111 | 31.096 |
| Example 5 | 1050 | 920 | 103 | 34.927 |
| Comparative Example 1 | Aggregated, irregular sheet shaped, and difficult to observe | | | 175.816 |
| Comparative Example 2 | Aggregated, sheet shaped, and difficult to observe | | | 143.042 |
| Comparative Example 3 | Block shaped and difficult to observe | | | 74.086 |

As can be seen from Table 1 to Table 2 and FIGs. 2 to 6, the ferric phosphate products prepared in the examples of the present application all have a high iron-to-phosphorus ratio and a moderate specific surface area, and all have a sheet shaped structure.

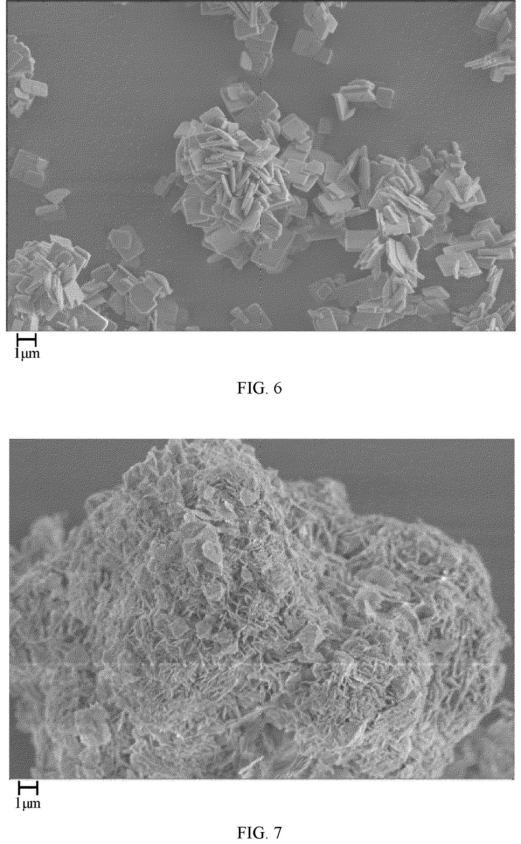

Compared with Example 1, in Comparative Example 1, the ferric phosphate slurry prepared in the seed crystal preparation process is directly used as the final slurry. The obtained ferric phosphate has a lower iron-to-phosphorus ratio and a larger specific surface area, which are due to following factors: The oxidation time period in Comparative Example 1 is short, and in the short time period a large number of crystal nuclei are formed, which have a large surface energy, and thus are easy to aggregate (as shown in FIG. 7), which makes it difficult to completely wash away the adsorbed and wrapped phosphate ions during the washing process, resulting in a low iron-to-phosphorus ratio.

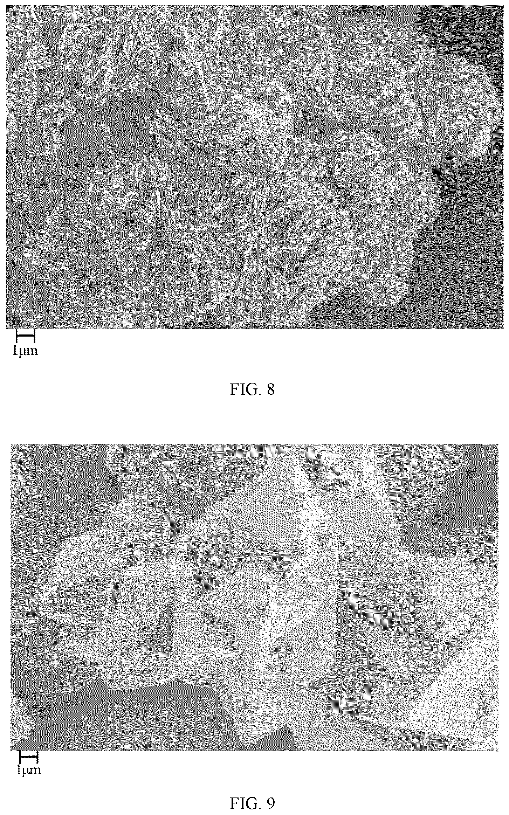

Compared with Example 1, in the preparation of ferric phosphate of Comparative Example 2, the seed crystal slurry is added after the addition of hydrogen the peroxide solution. The obtained ferric phosphate has a lower iron-to-phosphorus ratio, which is due to the following factors: The ferrous dihydrogen phosphate solution in Comparative Example 2 is pre-oxidized, during which the nucleation process is uncontrollable, thus the resulting product has an obvious aggregated micro-morphology (as shown in FIG. 8), which makes it difficult to completely wash away the adsorbed and wrapped phosphate ions during the washing process, resulting in a low iron-to-phosphorus ratio. It can be concluded that the addition sequence of the seed crystal slurry also plays an important role in the synthesis of the sheet shaped ferric phosphate with a high iron-to-phosphorus ratio according to the present application.

Compared with Example 1, in Comparative Example 3, the oxidation time period is prolonged in the seed crystal preparation process. The obtained ferric phosphate has a lower iron-to-phosphorus ratio and an over small specific surface area, which are due to the following factors: The oxidation time period in the seed crystal preparation process is extended, the oxidation is over slow without the seed crystals, and hence the crystal nuclei in the system are insufficient, making the precipitate formed in the oxidation process continue to grow on the original crystal nuclei, gradually grow into octahedral structures from the irregular sheets, and finally form ferric phosphate with an orthorhombic crystal structure and an octahedral micromorphology.

The technical features of the above-mentioned embodiments can be combined arbitrarily. In order to make the description concise, not all possible combinations of the technical features are described in the embodiments. However, as long as there is no contradiction in the combinations of these technical features, the combinations should be considered as in the scope of the present disclosure.

The above-described embodiments are only several implementations of the present disclosure, and the descriptions are relatively specific and detailed, but they should not be construed as limiting the scope of the present disclosure. It should be understood by those of ordinary skill in the art that various modifications and improvements can be made without departing from the concept of the present disclosure, and all fall within the protection scope of the present disclosure. Therefore, the patent protection of the present disclosure shall be defined by the appended claims.

## Claims

1. A sheet shaped ferric phosphate with a high iron-to-phosphorus ratio, wherein the sheet shaped ferric phosphate with a high iron-to-phosphorus ratio is a sheet shaped structure with the iron-to-phosphorus (Fe/P) ratio greater than 0.99, a ratio of length to width to thickness of the sheet shaped structure is (105 to 130):(90 to 100):(10 to 12), 3.5 m²/g ≤ a specific surface area of the sheet shaped structure ≤ 6.5 m²/g, and a particle size of the sheet shaped structure < 35 µm.

2. A method for preparing the sheet shaped ferric phosphate with a high iron-to-phosphorus ratio according to claim 1, comprising steps of:
providing a first ferrous dihydrogen phosphate solution and a second ferrous dihydrogen phosphate solution;
heating the first ferrous dihydrogen phosphate solution to a temperature, then dropwisely adding an oxidant for a first dropwise addition time period, and holding the temperature after the dropwise addition is completed to obtain a seed crystal slurry;
adding the seed crystal slurry into the second ferrous dihydrogen phosphate solution and heating to a temperature, then dropwisely adding the oxidant for a second dropwise addition time period, and holding the temperature after the dropwise addition is completed to obtain an ferric phosphate dihydrate slurry; and
subjecting the ferric phosphate dihydrate slurry to filtration, washing, drying and sintering in sequence to obtain the sheet shaped ferric phosphate with a high iron-to-phosphorus ratio;
wherein the first dropwise addition time period is shorter than the second dropwise addition time period.

3. The method for preparing the sheet shaped ferric phosphate with a high iron-to-phosphorus ratio according to claim 2, wherein a concentration of each of the first ferrous dihydrogen phosphate solution and the second ferrous dihydrogen phosphate solution both is in a range from 0.7 mol/L to 1.1 mol/L, and the first ferrous dihydrogen phosphate solution and the second ferrous dihydrogen phosphate solution are each prepared by steps of:
reacting dilute phosphoric acid with iron powder to obtain a slurry, and filtering the slurry after the reaction is completed to obtain the first ferrous dihydrogen phosphate solution or the second ferrous dihydrogen phosphate solution;
wherein a mass percentage of phosphoric acid in the dilute phosphoric acid is in a range from 20% to 35%, and a molar ratio of the iron powder to the dilute phosphoric acid is in a range from 0.35:1 to 0.5:1.

4. The method for preparing the sheet shaped ferric phosphate with a high iron-to-phosphorus ratio according to claim 2, wherein the seed crystal slurry is prepared by steps of:
heating the first ferrous dihydrogen phosphate solution to a temperature ranged from 70 °C to 90 °C, then dropwisely adding the oxidant uniformly, and holding the temperature for 60 min to 120 min after the dropwise addition is completed to obtain the seed crystal slurry, wherein the first dropwise addition time period is in a range from 5 min to 15 min.

5. The method for preparing the sheet shaped ferric phosphate with a high iron-to-phosphorus ratio according to claim 2, wherein the ferric phosphate dihydrate slurry is prepared by steps of:
adding the seed crystal slurry into the second ferrous dihydrogen phosphate solution and heating to a temperature ranged from 70 °C to 90 °C, then dropwisely adding the oxidant uniformly, and holding the temperature for 60 min to 120 min after the dropwise addition is completed to obtain the ferric phosphate dihydrate slurry, wherein the second dropwise addition time period is in a range from 30 min to 90 min.

6. The method for preparing the sheet shaped ferric phosphate with a high iron-to-phosphorus ratio according to claim 2, wherein in the step of preparing the seed crystal slurry and the step of preparing the ferric phosphate dihydrate slurry, a molar ratio of the oxidant to divalent iron is in a range from 0.6:1 to 0.9:1;
the oxidant is selected from the group consisting of a hydrogen peroxide solution, ammonium persulfate, sodium persulfate, or any combination thereof.

7. The method for preparing the sheet shaped ferric phosphate with a high iron-to-phosphorus ratio according to claim 2, wherein in the step of preparing the sheet shaped ferric phosphate with a high iron-to-phosphorus ratio, the washing is countercurrent washing, and the washing is performed until a conductivity of the deionized water after the washing is less than or equal to 200 µS/cm; the drying is performed at a temperature in a range from 90 °C to 110 °C for 8 hours (h) to 24 h; and the sintering is performed at a temperature in a range from 600 °C to 700 °C for 2 h to 4 h.

8. A lithium iron phosphate cathode material, wherein the lithium iron phosphate cathode material is prepared by uniformly mixing the sheet shaped ferric phosphate with a high iron-to-phosphorus ratio according to claim 1 and a lithium source to obtain a mixed material, and then forming the mixed material into the lithium iron phosphate cathode material through a high-temperature solid-phase method.

9. A cathode plate, comprising the lithium iron phosphate cathode material according to claim 8.

10. A secondary battery, comprising the cathode plate according to claim 9.
